# EUROPEAN PATENT APPLICATION

(11) **EP 1 072 938 A2**
(43) Date of publication of application: **31.01.2001**
(21) Application number: 00115925.0
(22) Date of filing: 25.07.2000
(51) Int. Cl.: G02F 1/35, G02F 1/37

(54) **Optical wavelength conversion unit**

(30) Priority: 27.07.1999 JP 21262999
(71) Applicant: Ushio Research Institute of Technology, Inc., Shizuoka-ken (JP)
(72) Inventor: Sakuma, Jun, Yokohama-shi, Kanagawa-ken (JP)
(74) Representative: Tomerius, Isabel, Dr. Dipl.-Chem.

(57) **Abstract**

A wavelength conversion unit which can easily be handled and which has a high safety characteristic and improved wavelength conversion efficiency. The laser beam incident through an inlet window is incident on a non-linear optical crystal (4) through a first beam shaping means (3) and its wavelength is converted to a harmonic wave. After having passed a wavelength selection filter (5) and another beam shaping means the laser beam emitted by the non-linear optical crystal (4) is emitted through an outlet window. The first beam shaping means (3) shapes the incident laser beam in such a way that the laser beam is substantially in parallel with a direction corresponding to a phase alignment angle of the non-linear optical crystal, whereas the laser beam is condensed in the other direction. The beam shaping means (3) is a cylindrical lens. In addition, a laser beam different from the wavelength conversion beam is incident from the wavelength selection filter (5) on a power receptor/power monitor (12) and is converted into heat.

## Description

### BACKGROUND OF THE INVENTION

### FIELD OF THE INVENTION

This invention relates to a wavelength conversion unit applied in a machining laser device for molding a processed printed circuit board, such as a multi-layered printed circuit board or the like, with laser beam.

### DESCRIPTION OF RELATED ART

Lasers used in machining processes, such as punching holes in a printed circuit board and cuffing of a film and a metal or the like. The printed circuit board or resin or metal applied thereto as a film material, which is a processed item, in general, shows a higher absorption efficiency as its wavelength is shorter, and further, shows a superior processing efficiency. In addition, as the wavelength is shorter, the beam is more effective for a fine machining operation.

Due to this fact, the wavelength of the laser beam to be applied for the machining processing has become a short wavelength beam in recent years. In order to generate a laser beam of short wavelength, it is advantageous to use a wavelength conversion system operated with a non-linear optical crystal being applied as the wavelength conversion element.

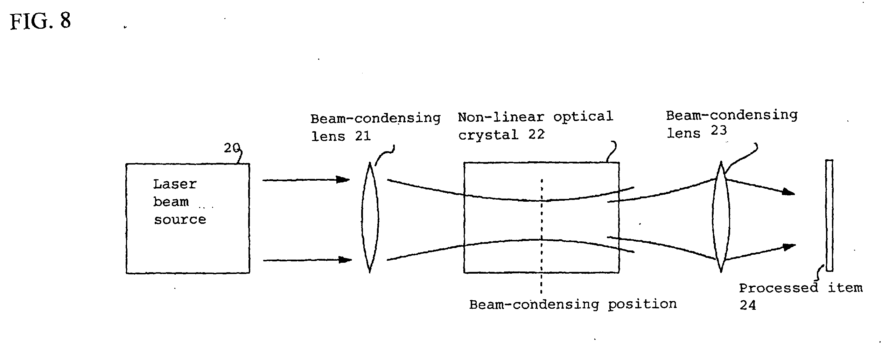

Fig. 8 schematically illustrates a configuration of a laser device for performing a machining processing with a laser beam whose wavelength is converted by a wavelength conversion element. The laser beam emitted by the laser beam source 20 is condensed by a condenser lens 21 and incident on a non-linear optical crystal 22. The wavelength of part of the laser beam incident on the non-linear optical crystal 22 is changed, emitted by the wavelength conversion element 3, the emitted laser beam is condensed by a condenser lens 23 and radiated against an item 24 to be processed. As the non-linear optical crystal 22, for example, BBO, LBO and CLB crystals and the like are utilized.

Many of these non-linear optical crystals 22 are hygroscopic, and if they are left in the surrounding atmosphere as they are, they deteriorate. In addition, it is known that, when the temperature and the phase alignment angle (an angle where the laser beam is incident on the crystal) of the non-linear optical crystal 22 are changed, the emitted laser power is changed.

Accordingly, the non-linear optical crystal 22 is normally provided with either a heating means or a cooling means, and the optical crystal 22 is stored in a holder having windows through which the laser beam is passed at an inlet port and an outlet port. Dried air or the like is supplied into the holder so as to shut off the crystal relative to the external environment, and at the same time, it is controlled such that the crystalline temperature is kept constant.

Temperature control for the non-linear optical crystal 22 is carried out such that a temperature-measuring element (a thermocouple or the like) is contacted with the surface of the non-linear optical crystal 22 and the entire non-linear optical crystal 22 is covered by the heating means (a heater or the like or a Peltier element and the like).

When the laser beam is incident on the non-linear optical crystal and the laser beam having its wavelength converted is emitted, normally the sectional area of the laser beam incident on the non-linear optical crystal is reduced (i.e., the laser beam is condensed) to increase the power density and to improve the wavelength conversion efficiency. Accordingly, the incident side of the wavelength conversion element is provided with a laser beam shaping means, such as a lens for condensing the laser beam. In Fig.8, the condensing lens 21 is a laser beam shaping means for condensing the laser beam incident on the wavelength conversion element.

In the case where a machining laser device is assembled with the non-linear optical crystal 22 stored in said holder, the position of the beam shaping means is normally arranged relative to the non-linear optical crystal 22 in such a way that the beam condensing position may occupy a substantially central location of the non-linear optical crystal 22 as shown in Fig.8. However, when a laser beam having a high power is concentrated at one point in the non-linear optical crystal 22, the concentrated point is likely to cause damage, and it is necessary to pay a certain degree of attention to insure that, when the laser device is assembled, the condensing position attained by the beam shaping means does not become the incident surface or the output surface of the non-linear optical crystal 22 and the window sections of the holder.

In the prior art system, as described above, the holder storing the non-linear optical crystal and various kinds of composing members constituting the wavelength conversion device, such as the beam shaping means or the like, have been separately constructed.

Due to this fact, the assembling operation for the wavelength conversion unit required a suitable adjustment of the mutual positions of these members. In particular, if the beam condensing position of the beam shaping means with respect to the non-linear optical crystal is not adjusted to a suitable position, there is a probability that the holder window sections or the non-linear optical crystal is occasionally damaged.

In addition, as described above, the prior art system is made such that the holder storing the non-linear optical crystal and the various kinds of members constituting the wavelength conversion unit, such as the beam shaping means or the like, have been separately constructed, and after assembling these composing members, the entire system is required to be stored in the casing so as to prevent that the laser beam is reflected at the beam-condensing lens or the incident surface of the non-linear optical crystal. In particular, in recent years, the laser beam used for a machining processes has a short wavelength and a high power, resulting in that this kind of laser beam is likely to stray out of the casing where it can injure a human body. Due to this fact, the prior art system required a sufficient arrangement for assuring safety in operation.

In turn, in case the beam-condensing lens 21 as shown in Fig.8 is used as the beam shaping means and the laser beam is condensed so that its circular shape is kept, the laser beam incident on the non-linear optical crystal 22 does not become a parallel beam.

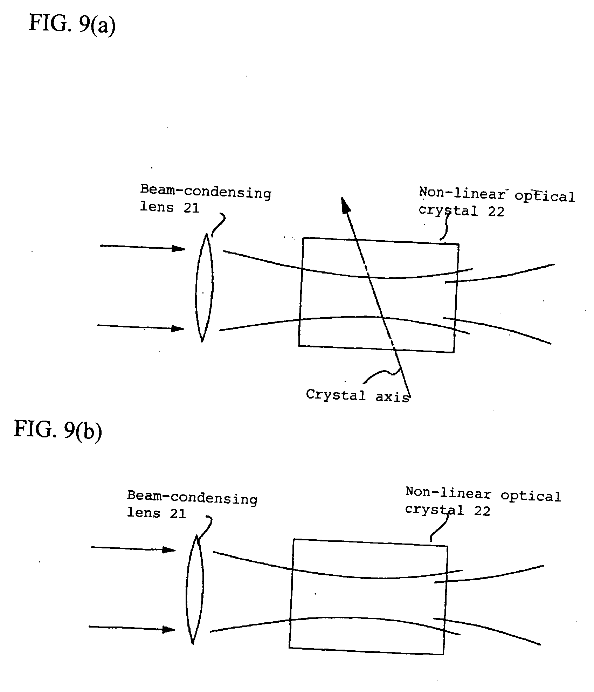

Figs. 9(a) & 9(b) are views showing the laser beam incident on the non-linear optical crystal when the laser beam is condensed while its circular shape is maintained, wherein Fig. 9(a) is a view taken from a lateral direction and Fig. 9(b) is a view taken from above. The laser beams incident on the non-linear optical crystal 22 in Figs.9(a) & 9(b) are condensed in all directions.

If the direction of the crystalline axis of the non-linear optical crystal 22 corresponds to the direction shown in Fig.9 (a), the direction of the laser beam condensed by the beam-condensing lens 21 corresponds to a direction of the phase alignment angle of the non-linear optical crystal 22 and it does not show a specified angle with respect to the direction of the crystalline axis. Due to this fact, a large number of beams having displaced components relative to the phase alignment angle of the non-linear optical crystal 22 are incident on the crystal. Accordingly, the wavelength conversion efficiency becomes poor and the power of the laser beam with the converted wavelength emitted by the non-linear optical crystal 22 is decreased. Further, if the parallel laser beams emitted by the laser beam source are incident on the wavelength conversion element while the laser beams are not condensed, no displacement with respect to the phase alignment angle occurs, although the power density of the incident laser beams is decreased, the wavelength conversion efficiency is reduced as described above and the power of the emitted laser beam is also decreased.

### SUMMARY OF THE INVENTION

The present invention has been made in view of the aforesaid circumstances and it is a primary object of the present invention to provide a wavelength conversion unit which may easily be handled, which has a high safety characteristic and in which wavelength conversion efficiency is improved by a method wherein the non-linear optical crystal and the parts required for the wavelength conversion, such as the beam shaping means and the like, are integrally assembled.

In the present invention, the aforesaid problems are overcome by the arrangements described as follows.
(1) At least one beam shaping means for shaping an incident laser beam and a wavelength conversion element on which the laser beam shaped by said beam shaping means is incident and for converting the wavelength of the laser beam are installed within a casing having a window section on which a laser beam is incident and a window section from which the laser beam with its wavelength converted is emitted. The beam shaping means shapes the incident laser beam in such a mariner that it may become substantially in parallel with a direction corresponding to a phase alignment angle of the wavelength conversion element and in such a manner that the beam is condensed with respect to a direction not corresponding to the phase alignment angle.
(2) In the aforesaid arrangement (1), a wavelength separating means for selectively branching off a laser beam of a pre-selected wavelength from the laser beams emitted by the wavelength conversion element and a power receptor for converting the laser beam branched off by the wavelength separating means are arranged within the casing. Further, as required, there is provided means for cooling the power receptor.

Since the present invention has been constituted as indicated in the above item (1), it is possible to cause the laser beam to be incident at a specified angle relative to the direction of the crystalline axis of the non-linear optical crystal without decreasing the power density of the laser beam. Due to this fact, the wavelength conversion efficiency can be improved and the laser beam is not concentrated at one point, with the result that damage to the optical components installed at a later stage can also be reduced. Additionally, since the non-linear optical crystal and the beam shaping means and the like are integrally assembled and stored in one casing, when the wavelength conversion unit is manufactured, if the position between the beam shaping means and the non-linear optical crystal is adjusted in advance, no adjustment of their relative positions is required when they are combined with the laser beam source, resulting in that their handling may easily be carried out and the non-linear optical crystal is not erroneously damaged.

Further, when either the power monitor or the power receptor and the like are arranged within one casing as indicated in the above item (2), no beam other than the desired output beam is discharged from the casing and safety can be assured.

In the present invention, the following effects can be attained.
(1) At least one beam shaping means for shaping an incident laser beam and a wavelength conversion element on which the laser beam shaped by said beam shaping means is incident and for converting the wavelength of the laser beam are installed within a casing, said beam shaping means shapes the incident laser beam in such a manner that it may become substantially in parallel with a direction corresponding to a phase alignment angle of said wavelength conversion element and in such a manner that the beam is condensed with respect to a direction not corresponding to the phase alignment angle, so that the laser beam can be incident at a specified angle with respect to a direction of the crystalline axis of the non-linear optical crystal without reducing the power density of the laser beam.
   Due to this fact, the wavelength conversion efficiency can be improved and, at the same time, damage to the optical parts arranged at a rear stage can also be reduced.
(2) Since the non-linear optical crystal and the beam shaping means and the like are integrally assembled in one casing, adjustment of the positions of these elements is not required, their handling becomes easy, and at the same time, the non-linear optical crystal is not erroneously damaged.
(3) Either the power monitor or the power receptor and the like is installed within one casing, resulting in that no laser beam other than the converted laser beam is discharged out of the casing and the desired safety characteristics can be assured.

### BRIEF DESCRIPTION OF THE DRAWINGS

Fig. 1 is a schematic view of an entire configuration of a wavelength conversion unit in accordance with a preferred embodiment of the present invention.
Fig. 2(a) is a schematic view showing one example of a beam shaping means used in the preferred embodiment of the present invention.
Fig. 2(b) is a schematic view showing the effect of the beam shaping means according to Fig. 2(a).
Figs. 3(a) & 3(b) show the relation between cylindrical laser beam condensing lenses and a crystalline axis of a non-linear optical crystal.
Figs. 4(a) & 4(b) show further examples of wavelength conversion units according to preferred embodiments of the present invention.
Fig. 5 is a still further schematic view showing another example of a wavelength conversion unit according to a preferred embodiment of the present invention.
Figs. 6(a) & 6(b) show further examples of preferred embodiments of a wavelength conversion unit of the present invention.
Fig. 7 is a schematic view showing another example of a wavelength conversion unit of a preferred embodiment of the present invention.
Fig. 8 is a view schematically showing a laser beam device for machining with a laser beam whose wavelength is converted by the wavelength conversion element.
Figs. 9(a) & 9b are views showing a laser beam incident on a non-linear optical crystal in the case that a laser beam is condensed while its shape is kept at its circular shape.

### DETAILED DESCRIPTION OF THE INVENTION

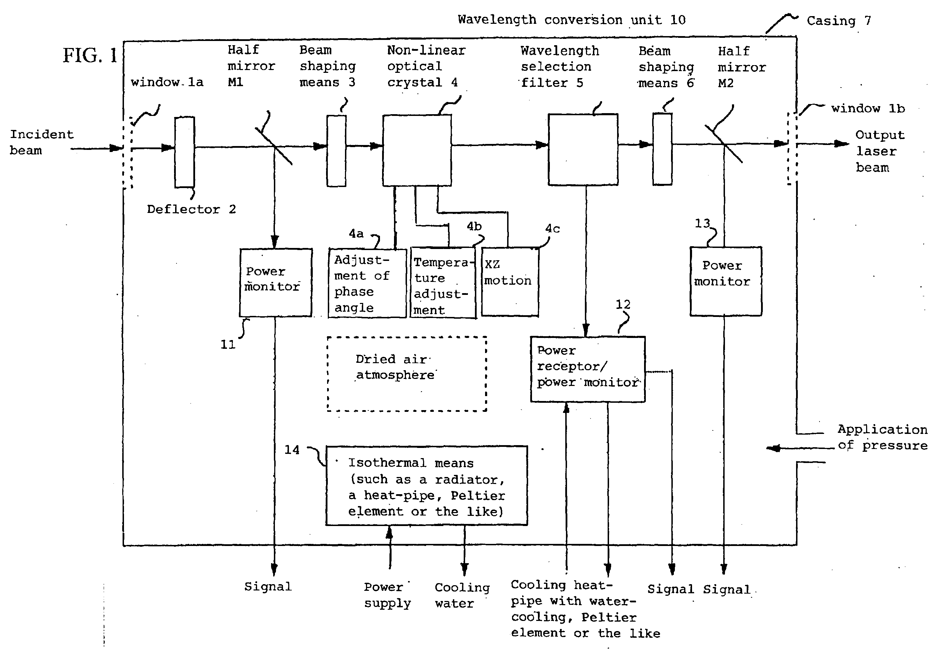

Fig. 1 show an entire configuration of the wavelength conversion unit 10 of a preferred embodiment of the present invention. In this figure, the casing 7 is made of metal coated with a nickel plating. Its inner surface is Teflon coated. Opposite sides of the casing 7 are provided with windows 1a, 1b through which a laser beam may pass.

A deflector 2 for converting the incident laser beam into a deflected beam, and a beam shaping means 3 for shaping the shape of the laser beam are provided in the casing 7. The beam shaping means 3 used in the present preferred embodiment shapes the laser beam in a direction corresponding to the phase alignment angle of the laser beams incident on the non-linear optical crystal 4 in such a way that substantial parallel beams are incident on the crystal and the laser beam is further condensed in a direction other than the phase alignment angle in such a way that the sectional area of the incident laser beam is reduced. A cylindrical lens may be used as a beam-condensing lens. A non-linear optical crystal 4 comprised of BBO, LBO or CLBO and the like converts the wavelength of the laser beam incident on the crystal into a harmonic wave and then emits a laser beam (herein defined as a reference laser beam) having the same wavelength as those of the wavelength converted beam and the incident laser beam.

A phase alignment angle adjusting means 4a for adjusting an angle of crystalline axis of the non-linear optical crystal 4 relative to the incident laser beam, a temperature adjusting means 4b for keeping the temperature of the crystal 4 at a constant value and an XZ moving means 4c for moving the non-linear optical crystal in an XZ direction (Z is an optical axis of the laser beam and X is a direction vertical to the direction Z) are attached to the non-linear optical crystal 4.

A wavelength selection filter 5, constituted by a dichroic mirror, is provided through which the wavelength converted beam is passed and the laser beam of wavelength other than the wavelength converted laser beam (the reference laser beam) is reflected. In addition, a beam shaping means 6 for shaping the converted laser beam is provided.

In Fig. 1, the laser beam having entered through the window 1a arranged at the incident side of the casing 7 is incident on the half mirror M1 through the deflector 2, and part of it is reflected by the half mirror M1 and incident on a power monitor 11. The power monitor 11 measures the power of the incident reference laser beam and outputs the measured value from the casing.

The laser beam passed through the half mirror M1 is incident on the non-linear optical crystal 4 through the beam shaping means 3. The non-linear optical crystal 4 emits the reference laser beam and its wavelength converted laser beam as described above, and then the reference laser beam and the wavelength converted laser beam are incident on the wavelength selection filter 5 acting as the wavelength separating means.

The wavelength selection filter 5 allows the wavelength converted laser beam to pass and reflects the reference laser beam of a wavelength other than that of the wavelength converted laser beam. The laser beam reflected by the wavelength selection filter 5 is incident on the power receptor/power monitor 12. The power receptor/power monitor 12 converts the incident laser beam into heat, measures the power of the laser beam and outputs it from the casing. The power monitor/power receptor 12 is cooled with a heat-pipe, water-cooling or a Peltier element and the like, a power supply and cooling water and the like are supplied from outside.

In addition, the wavelength converted laser beam passed through the wavelength selection filter 5 is shaped by the beam shaping means 6, the laser beam is incident on the half mirror M2, part of it is reflected by the half mirror M2 and incident on the power monitor 13 for measuring the power of the laser beam. The power monitor 13 measures the power of the incident laser beam and outputs the measured value from the casing. The wavelength converted laser beam, after having passed through the half mirror M2, is emitted through the window 1b.

An inner space of the casing 7 is pressurized in advance and kept in a dry air atmosphere. In addition, it is kept in an isothermal state by the isothermal means 14 comprised of a radiator, a heat-pipe or a Peltier element and the like. In addition, the windows 1a, 1b may be openings and the window 1a itself may be formed as the beam shaping means.

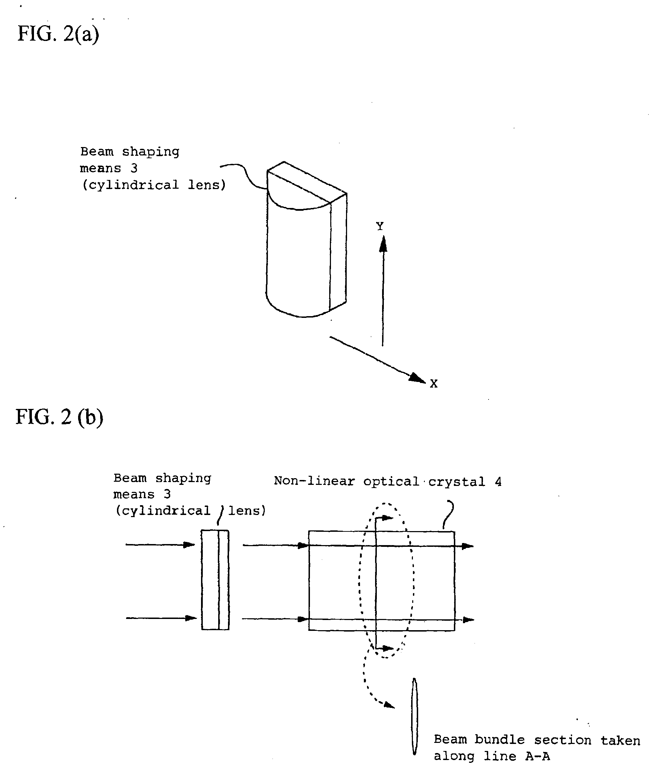

Fig. 2 is a view showing an example of a beam shaping means 3 for shaping of the laser beam incident on the non-linear optical crystal 4. The beam shaping means 3 used in the present preferred embodiment is a cylindrical lens, for example, of an arcuate cross-sectional shape, as shown in Fig.2 (a), and the laser beam is condensed in the direction X of Fig.2(a), but the beam is not condensed in direction Y. The laser beam emitted by such a lens has an elliptical shape in a cross-sectional view of the laser bundle when the laser beam is condensed as indicated by line A-A in Fig.2(b).

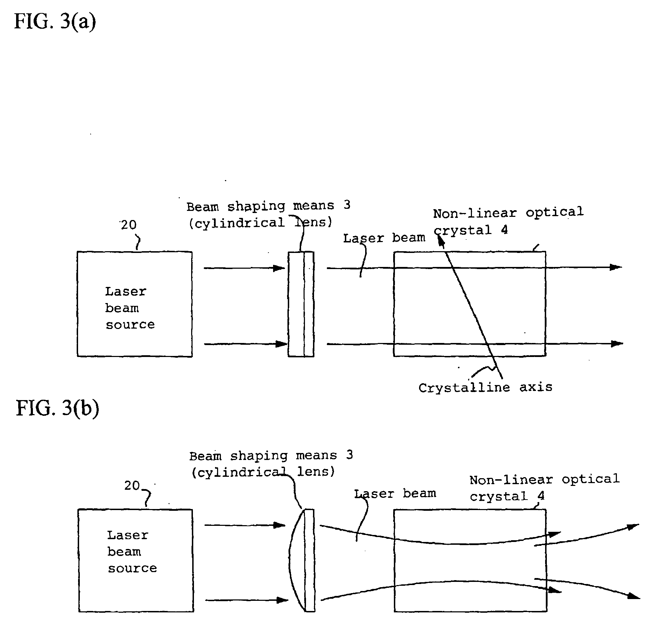

Figs. 3(a) and 3(b) are views showing the relation between the laser beam condensing direction of the beam shaping means 3 (a cylindrical lens) and the crystalline axis of the non-linear optical crystal 4, wherein Fig.3 (a) is a view taken from direction X in Fig.2 and Fig.3(b) is a view taken from direction Y in that figure..

The cylindrical lens condenses the laser beam incident on the non-linear optical crystal 4 and the laser beam in a direction corresponding to the phase alignment angle of the non-linear optical crystal 4 in such a manner that substantial parallel laser beams, as shown in Fig.3(a), are incident on the crystal, and further condenses the laser beam in a direction other than the phase alignment angle in such a manner that the cross-sectional area of the laser beam bundle becomes small, as shown in Fig.3(b). As to the width of the beam in its condensing direction, it is preferable that the beam width with respect to the width in a direction which is not condensed is 1/2 or less.

Application of the beam shaping means 3 as described above allows the laser beam to be incident at a specified angle with respect to the direction of the crystalline axis of the non-linear optical crystal 4 without substantially decreasing the power density of the laser beam and further allows the wavelength conversion efficiency to be improved.

In addition, the cross-sectional shape of the laser beam of the wavelength converted beam emitted by the non-linear optical crystal 4 also becomes elliptical in shape so that - compared with a laser beam condensed while its circular shape is retained- as described above, the laser beam is not concentrated at one point, and thus, is less likely to damage the optical components downstream of the non-linear optical crystal 4.

In addition, as the beam shaping means 6 is arranged at the output side of the non-linear optical crystal 4, it is possible to use a normal beam-condensing lens comprised of the aforesaid convex lens and the like; although, it is preferable that the position of the beam shaping means 6 be set at a position in which a cross-sectional area of the laser beam incident on the beam shaping means 6 is larger than the cross-sectional area of the laser beam incident on the beam shaping means 3. Since the laser beam incident on the beam shaping means 6 has a shorter wavelength as compared with that of the laser beam incident on the beam shaping means 3 and has a higher energy, its narrow cross-sectional area causes the power density to be increased, thus enhancing the probability of damage of the beam shaping means 6.

In a preferred embodiment of the present invention, there is provided a beam shaping means for condensing the laser beam in a direction corresponding to the phase alignment angle of the non-linear optical crystal in such a manner that substantial parallel beams are incident on the crystal, and in addition for condensing the laser beam in a direction not corresponding to the phase alignment angle in such a manner that the cross-sectional area of the beam bundle may become small, so that it is possible to emit the laser beam at a specified angle to the direction of the crystalline axis of the non-linear optical crystal without substantially decreasing the power density of the laser beam. Due to this fact, the wavelength conversion efficiency can be improved, and at the same time, damage to the optical components arranged at a later stage can also be decreased.

In addition, since the non-linear optical crystal and the beam shaping means or the like are integrally assembled to each other and are arranged in one casing, adjustment of their mutual positions is not required when combining them with the laser source, resulting in their handling becoming easy, and at the same time, damage to the non-linear optical crystal can be avoided. Further, since the power monitor or the power receptor or the like is arranged within the same casing, laser beams other than the desired laser beam are not emitted from the casing resulting in a very safe device. In addition, in the aforesaid preferred embodiment, although an example has been described in which the wavelength selection filter, a plurality of power monitors and power receptor and the like are arranged within one casing, it is possible to provide various modifications in which non-required elements are removed or a certain member is installed outside the casing.

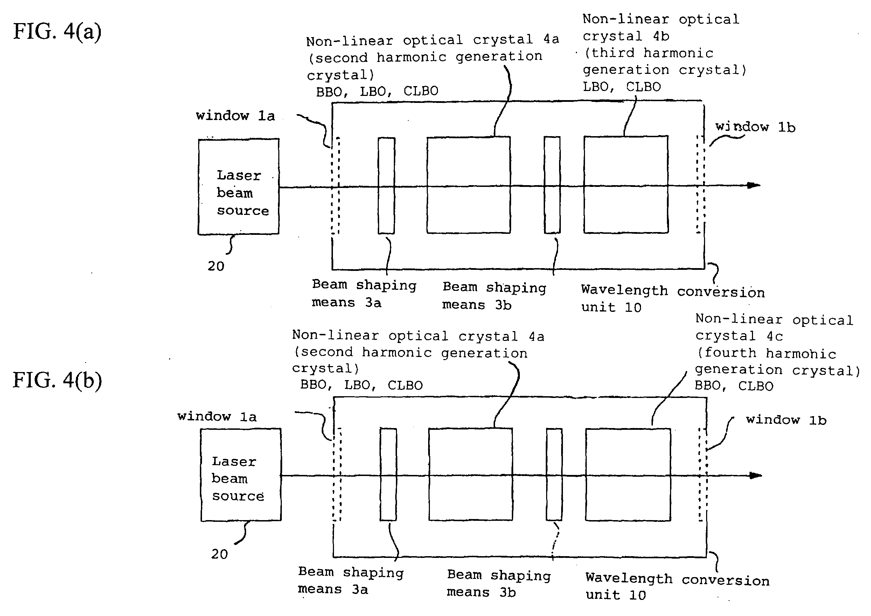

In the preferred embodiment of the present invention described above, the case has been described in which the wavelength conversion unit makes use of one non-linear optical crystal, although various kinds of modifications can be attained as shown in Figs.4 to 7.

In any of these preferred embodiments, as shown in Fig.3 above, the laser beam is condensed in a direction corresponding to the phase alignment angle of the non-linear optical crystal in such a manner that substantially parallel beams are incident on the crystal and the laser beam of angle other than the phase alignment angle is condensed in such a manner that the cross-sectional area of the laser beam bundle becomes small, and then the laser beams are incident on the non-linear optical crystal. In Figs.4 to 7, only the non-linear optical crystal and the beam shaping means are illustrated, while the other elements shown in Fig.1 are eliminated.

Fig. 4 (a) illustrates an example in which a crystal for producing second harmonics (for example, a BBO, LBO or CLBO crystal; hereinafter called "second harmonic generation crystal") and a crystal for producing third harmonics (for example, an LBO or CLBO crystal; hereinafter called "third harmonic generation crystal") are utilized as non-linear optical crystals.

In this figure, the fundamental wave laser beam emitted by the laser source 20 is incident on the beam shaping means 3a of the wavelength conversion unit 10 through the window 1a. The beam shaping means 3a shapes the incident laser beam as illustrated in Figs.3(a) & 3(b) above.

The laser beam emitted by the beam shaping means 3a is incident on the first non-linear optical crystal (the second harmonic generation crystal) 4a and its wavelength is converted. The laser beam emitted by the first non-linear optical crystal (the second harmonic generation crystal) 4a is incident on the beam shaping means 3b, beam shaped as illustrated in Fig.3 and incident on the second non-linear optical crystal (the third harmonic generation crystal) 4b.

The second non-linear optical crystal 4b converts a wavelength of the laser beam emitted by the first non-linear optical crystal 4a and emits a third harmonic. This third harmonic is emitted out of the casing through the window 1b.

Fig. 4(b) illustrates an example in which a second harmonic generation crystal 4a (for example, BBO, LBO or CLBO crystal) and a crystal 4c for emitting a fourth harmonic (for example, LBO or CLBO crystal; hereinafter called "fourth harmonic generation crystal") are used as the non-linear optical crystals. The other components are similar to those shown in Fig.4(a). In Fig.4(b), the second non-linear optical crystal 4c converts a wavelength of the laser beam emitted by the first non-linear optical crystal 4a and then emits a fourth harmonic. This fourth harmonic is emitted through the window 1b out of the casing.

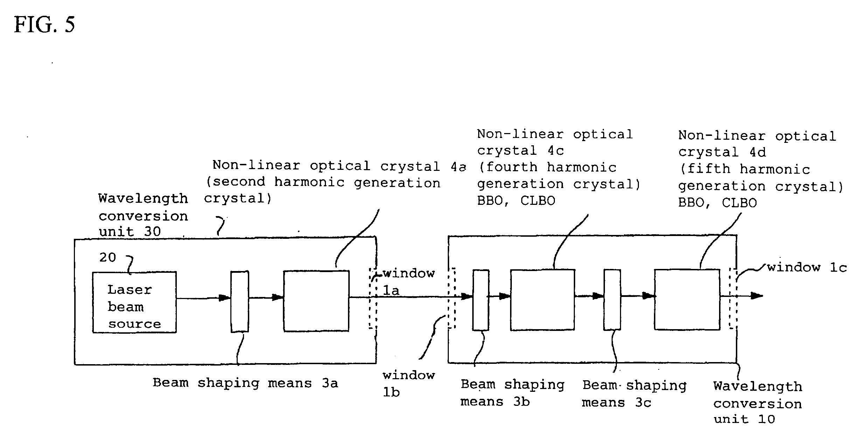

Fig. 5 illustrates a preferred embodiment in which there are provided a wavelength conversion unit 30 for converting a wavelength of the laser beam emitted by the laser source 20 into a second harmonic and for outputting it, and a wavelength conversion unit 10 for converting a wavelength of the laser beam emitted by the wavelength conversion unit 30 and for producing a fifth harmonic.

In this figure, the laser beam emitted by the laser source 20 arranged in the laser source unit 30 is incident on the first non-linear optical crystal (the second harmonic generation crystal) constituted by BBO, LBO or CLBO crystal and the like through the first beam shaping means 3a. The first non-linear optical crystal (the second harmonic generation crystal) 4a produces a second harmonic of the laser beam as above. The second harmonic emitted by the first non-linear optical crystal (the second harmonic generation crystal) 4a is emitted by the laser source unit 30 through the window 1a. The second harmonic is incident on the wavelength conversion unit 10 through the window 1b.

The second harmonic introduced into the wavelength conversion unit 10 is incident on the second non-linear optical crystal (the fourth harmonic generation crystal) 4c constituted by BBO or CLBO crystals and the like through the second beam shaping means 3b, and the second non-linear optical crystal (the fourth harmonic generation crystal) 4c produces a fourth harmonic of the laser beam above. The laser beam emitted by the second non-linear optical crystal (the fourth harmonic generation crystal) 4c is incident on the third non-linear optical crystal (called "fifth harmonic generation crystal") 4d constituted by BBO or CLBO or the like through the third beam shaping means 3c, and the third non-linear optical crystal (fifth harmonic generation crystal) 4d produces a fifth harmonic of the laser beam above. The fifth harmonic is emitted by the wavelength conversion unit 10 through the window 1c.

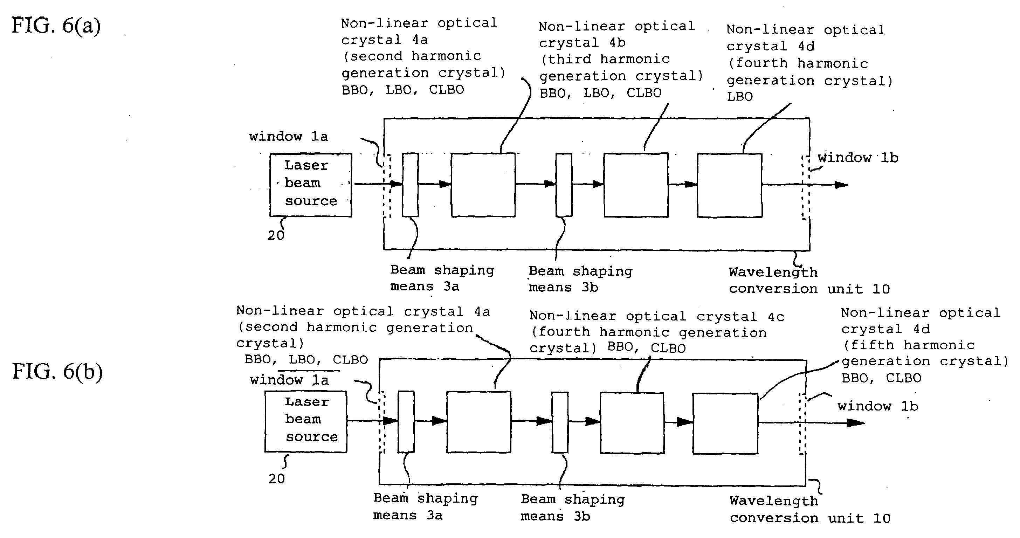

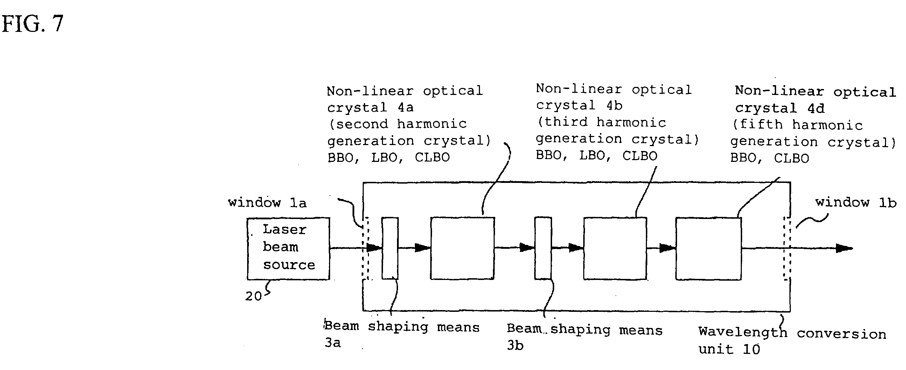

Fig. 6(a), 6(b) and Fig.7 illustrate a further preferred embodiment in which first to third non-linear optical crystals are arranged in the wavelength conversion unit and the beam shaping means is arranged at the incident side of the first and the second non-linear optical crystals. In Fig.6(a), the laser beam emitted by the laser source 20 is incident on the wavelength conversion unit 10 through the window 1a. The laser beam introduced into the wavelength conversion unit 10 is incident on the first non-linear optical crystal (second harmonic generation crystal) 4a constituted by BBO, LBO or CLBO crystals and the like through the beam shaping means 3a and its wavelength is converted into the second harmonic. The laser beam emitted by the first non-linear optical crystal (the second harmonic generation crystal) 4a is incident on the beam shaping means 3b, its beam shape is shaped, and the beam is incident on the second non-linear optical crystal (the third harmonic generation crystal) 4b constituted by BBO, LBO or CLBO crystals and the like.

The second non-linear optical crystal 4b converts a wavelength of the laser beam emitted by the first non-linear optical crystal 4a and emits the third harmonic. This laser beam is further incident on the third non-linear optical crystal (the fourth harmonic generation crystal) 4c and the third non-linear optical crystal (the fourth harmonic generation crystal) 4c emits the fourth harmonic. This fourth harmonic is emitted to the outside of the casing through the window 1b.

Fig.(6) illustrates a case in which the fourth harmonic generation crystal 4c comprised of BBO or CLBO crystal and the fifth harmonic generation crystal 4d comprised of BBO or CLBO crystal are used in place of the second non-linear optical crystal (the third harmonic generation crystal) 4b and the third non-linear optical crystal (the fourth harmonic generation crystal) 4c in Fig.6 (a). Fig.7 illustrates a case in which the fifth harmonic generation crystal 4d comprised of BBO or CLBO crystal is used in place of the third non-linear optical crystal (the fourth harmonic generation crystal) 4c in Fig.6 (a), both of which can generate the fifth harmonic of the laser beam incident on the wavelength conversion unit 10.

## Claims

1. A wavelength conversion unit comprising at least one beam shaping means for shaping an incident laser beam, a wavelength conversion element for converting a wavelength of a shaped laser beam emerging from said beam shaping means and a casing having an inlet window for introducing the incident laser beam into the casing and an outlet window for radiating a wavelength converted laser beam out of the casing and within which said shaping means and said wavelength conversion element are located in a beam path between said inlet and outlet windows; wherein said beam shaping means is constructed so as to shape the incident laser beam into substantially parallel beams having a direction corresponding to a phase alignment angle of said wavelength conversion element and such that the incident laser beam is condensed in a direction other than said phase alignment angle.

2. A wavelength conversion unit according to claim 1, further comprising a wavelength separating means for selectively branching off a part of the laser beam emitted by said wavelength conversion element having a pre-selected wavelength, and a power receptor for converting the laser beam branched off by said wavelength separating means into heat; and wherein at least the wavelength separating means is arranged within said casing.

3. A wavelength conversion unit according to claim 1 or 2, wherein the beam shaping means is a cylindrical lens.

4. A wavelength conversion unit according to claim 3, wherein the cylindrical lens has an arcuate cross-section.

5. A wavelength conversion unit according to anyone of claims 1 to 4, wherein the laser beam emitted by the beam shaping means a condensed direction and an uncondensed direction; and wherein the width in said condensed direction is at most half the width of the laser beam in said uncondensed direction.

6. A wavelength conversion unit according to anyone of claims 1 to 5, wherein the wavelength conversion element produces a higher harmonic of the incident laser beam.

7. A wavelength conversion unit according to claim 6, wherein the wavelength conversion element is a non-linear optical crystal.

8. A wavelength conversion unit according to claim 6 or 7, wherein the non-linear optical crystal is one of a BBO, LBO and CLBO crystal.

9. A wavelength conversion unit according to anyone claims 2 to 8, wherein the wavelength selection means allows only the wavelength converted laser beam to pass and branches off a part of the laser beam whose wavelength has not been converted by the wavelength conversion element.

10. A wavelength conversion unit according to anyone of claims 1 to 9, wherein a further beam shaping means is arranged at an output side of the wavelength conversion element.

11. A wavelength conversion unit according to anyone of claims 1 to 10, wherein at least two beam shaping means and at least two wavelength conversion elements are arranged in the casing.
